# EUROPÄISCHE PATENTSCHRIFT

(11) **EP 1 455 097 B1**
(45) Veröffentlichungstag und Bekanntmachung des Hinweises auf die Patenterteilung: **14.11.2007**
(21) Anmeldenummer: 04004972.8
(22) Anmeldetag: 03.03.2004
(51) Int. Cl.: F16B 12/20

(54) **Verbindungsbeschlag zum Verbinden zweier auf Gehrung geschnittener Plattenteile**
Joint fitting for miter cutted panels
Ferrure d'accouplement pour panneaux coupés en biais

(30) Priorität: 06.03.2003 DE 20303651 U
(43) Veröffentlichungstag der Anmeldung: 08.09.2004
(73) Patentinhaber: Hettich-Heinze GmbH & Co. KG, 32139 Spenge (DE)
(72) Erfinder: Brinkmann, Manfred, 32609 Hüllhorst (DE); Amon, Michael, 32469 Petershagen (DE)
(74) Vertreter: Dantz, Jan Henning

(56) Entgegenhaltungen:
- WO-A-87/00251
- DE-A- 2 827 220
- DE-U- 29 605 547
- FR-A- 2 313 586
- US-A- 4 332 495
- US-A- 4 509 882

## Beschreibung

Die vorliegende Erfindung betrifft einen Verbindungsbeschlag zum Verbinden zweier auf Gehrung geschnittener Plattenteile aus Holz, Spanplatten, Kunststoff oder dergleichen.

Im Möbelbau ist es bekannt, Möbelteile wie z. B. den umlaufenden Rahmen eines Schubkastens aus Plattenteilen herzustellen, die auf Gehrung geschnitten und über ein Filmscharnier im äußern Eckbereich miteinander verbunden sind, wobei die entsprechend vorbereiteten Plattenteile nach dem Anbringen des Gehrungsschnittes aus einer gemeinsamen Ebene heraus aufgeklappt oder aufgestellt und im Gehrungsbereich mit Leim versehen und dann miteinander verklebt werden.

Bei dieser Herstellungsmethode ist es notwendig, vor einer Weiterverarbeitung eines derartigen Möbelteiles zunächst das Abbinden des Leimes im Gehrungs-Fugenbereich abzuwarten, um ein unbeabsichtigtes Lösen oder Verschieben der miteinander zu verbindenden Plattenteile sicher auszuschließen. Dies trifft auch zu, wenn die Platten im Eckbereich nicht über ein Filmscharnier miteinander verbunden sind.

Es ist auch bekannt, andere kastenartige Möbelteile in ähnlicher Weise vorzufertigen und diese im nicht montierten Zustand zu einer platzsparenden Verpackungseinheit zusammenzufassen und im Handel zu vertreiben, wobei es dann dem Endkunden überlassen wird, die Einzelteile des Möbels zusammenzubauen. Bei diesem Vertriebsweg kommt es ganz entscheidend darauf an, Montagemöglichkeiten zu schaffen, die es dem Endverbraucher auch ohne großes handwerkliches Geschick ermöglichen, derartige, vorgefertigte Möbel selbst fachgerecht zusammenzubauen.

Aus der FR 2 313 586 A ist ein Verbindungsbeschlag bekannt, durch den zwei auf Gehrung geschnittene Rahmenteile miteinander verbunden sind. Dabei weist der Verbindungsbeschlag ein Vaterteil, ein Mutterteil und einen Verbindungsbolzen auf. Das Vaterteil und das Mutterteil sind in Senkbohrungen der miteinander zu verbindenden Rahmenteile eingelassen, wobei die Längsachsen dieser Senkbohrungen parallel zueinander verlaufen, darüber hinaus verlaufen die Längsachsen der Senkbohrungen aber auch parallel zu denjenigen Schnittflächen der miteinander zu verbindenden Teile, die rechtwinklig zu diesen Teilen verlaufen. Außerdem zeigt die genannte Druckschrift eindeutig, dass die Senkbohrungen durch diese Schnittflächen nicht angeschnitten sind. Die Anwendung einer derartigen Verbindungstechnik beispielsweise bei einem Schrankkorpus hätte zur Folge, dass die Verbindungsbeschläge im Stirnseitenbereich eines Schrankkorpus liegen würden. Es könnte also jeweils lediglich im vorderen und im hinteren Stirnseitenbereich eines Schrankkorpus ein Verbindungsbeschlag angeordnet werden. Die Verbindungsbeschläge wären darüber hinaus auch von den Stirnseiten eines Schrankkorpus her sichtbar.

Der vorliegenden Erfindung liegt die Aufgabe zugrunde, einen Verbindungsbeschlag der gattungsgemäßen Art zu schaffen, der ein schnelles, sicheres und problemloses Verbinden zweier auf Gehrung geschnittener Plattenteile ermöglicht.

Die Lösung dieser Aufgabe besteht darin, dass der Verbindungsbeschlag aus einem in eine durch den Gehrungsschnitt angeschnittene Senkbohrung des ersten Plattenteiles eingesetzten und dem Gehrungsschnitt angepaßten Mutterteil und einem in eine entsprechende Senkbohrung des zweiten Plattenteiles eingesetzten, ebenfalls dem Gehrungsschnitt angepaßten Vaterteil besteht, wobei das Vaterteil mit einem in das Mutterteil hineinragenden Verbindungsbolzen mit einem Haltekopf versehen und das Mutterteil mit einer Aufnahme zum Hintergreifen des Haltekopfes ausgestattet ist, wobei die Längsachse des Verbindungsbolzens beim montierten Verbindungsbeschlag lotrecht zur Gehrungsfuge verläuft und die Aufnahme zum Hintergreifen des Haltekopfes aus einem Spannexzenter besteht, der innerhalb des Mutterteiles drehbar gelagert ist und der Verbindungsbolzen kippbeweglich am Grundkörper des Vaterteiles angeschlossen und aus einer Vormontagestellung in eine Montagestellung bewegbar ist.

Aus dieser Konstruktion ergeben sich verschiedene Vorteile.

Zum einen ermöglicht der erfindungsgemäße Verbindungsbeschlag ein problemloses, rasches und auch für technisch ungeübte Personen ausführbares Verbinden zweier auf Gehrung geschnittener Plattenteile, da diese lediglich entsprechend dem Winkel des Gehrungsschnittes zusammengeklappt werden müssen, um das Zusammenwirken der beiden Verbindungsbeschlagteile herbeizuführen. Ein Verleimen der beiden Platten mit den damit verbundenen, nicht unbeträchtlichen Wartezeiten für das Abbinden des Leimes entfällt, ebenso die Gefahr, dass zuviel aufgetragener Leim aus dem Bereich der Gehrungsfuge herausquillt und eine nachträgliche Säuberung des Eckbereiches erforderlich macht.

Ein weiterer Vorteil der Erfindung liegt darin, dass die Teile des Verbindungsbeschlages problemlos in die Senkbohrungen in Vormontageposition eingebracht werden können und der Verbindungsbolzen des Vaterteiles in die Plattenebene zurückverschwenkbar ist, so dass die Plattenteile flachliegend zusammen verpackt und transportiert werden können, ohne dass vorstehende Abschnitte des Vaterteiles hier störend sein könnten.

Durch die erfindungsgemäße Konstruktion ist es darüber hinaus mit Vorteil möglich, bei Plattenteilen, die zum Aufbau beispielsweise eines Schrankkorpus vorgesehen sind, pro Ecke drei, vier oder mehrere Verbindungsbeschläge vorzusehen.

Auf den Spannexzenter, der den Haltekopf des Verbindungsbolzens hintergreift, können hohe Verbindungskräfte aufgebracht und Toleranzen sehr gut überbrückt werden.

Der kippbeweglich am Grundkörper des Vaterteiles angeschlossene Verbindungsbolzen kann in einer Vormontagestellung belassen werden, in der der Verbindungsbolzen nicht über die Oberfläche eines Plattenteiles hinaus vorsteht. Somit kann z.B. eine automatische Fertigung ungehindert und störungsfrei ablaufen oder es können auch die Plattenteile leporelloartig zusammengefaltet werden, ohne dass dies durch vorstehende Verbindungsbolzen behindert oder beeinträchtigt wird.

Weitere Merkmale der Erfindung sind Gegenstand von Unteransprüchen.

Ausführungsbeispiele der Erfindung sind in den beigefügten Zeichnungen dargestellt und werden im folgenden näher beschrieben.

Es zeigen:
- Figur 1: einen Schnitt durch den Eckbereich zweier über einen erfindungsgemäßen Verbindungsbeschlag miteinander verbundener Plattenteile,
- Figur 2: eine gegenüber Figur 1 vergrößerte Schnittdarstellung durch einen erfindungsgemäßen Verbindungsbeschlag,
- Figur 3: eine perspektivische Darstellung eines Vaterteiles des Verbindungsbeschlages in einer Vormontagestellung,
- Figuren 4 und 5: verschiedene perspektivische Darstellungen eines Mutterteiles des erfindungsgemäßen Verbindungsbeschlages,
- Figur 6: eine perspektivische Darstellung eines Spannexzenters, der vom Mutterteil aufgenommen wird,
- Figur 7: eine perspektivische Darstellung eines Vaterteiles eines Verbindungsbeschlages nach einem weiteren Ausführungsbeispiel der Erfindung.

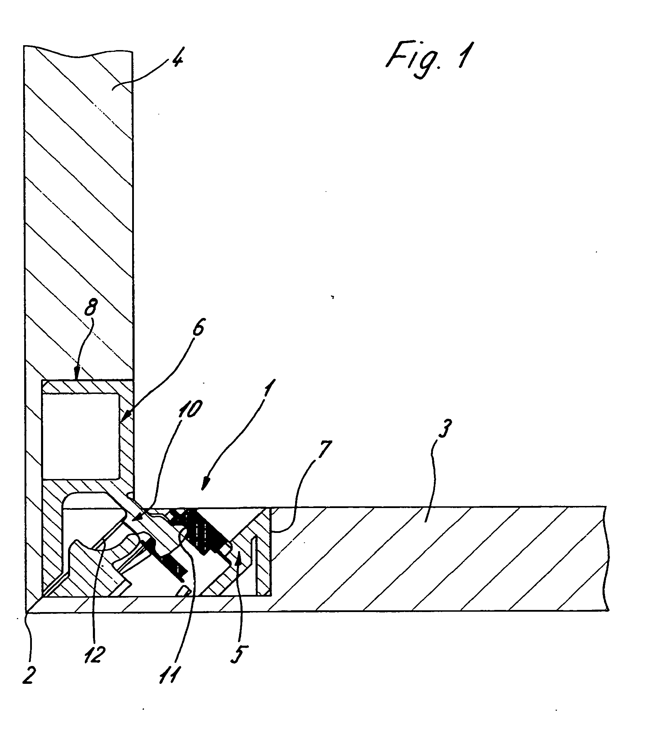

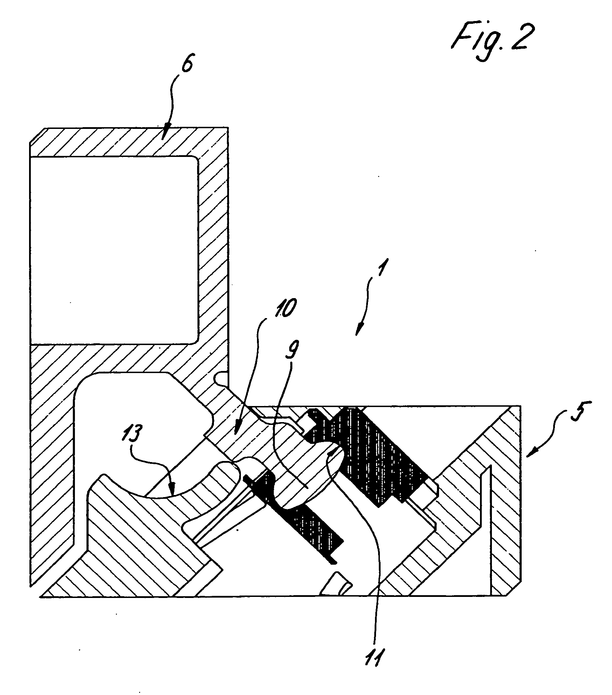

In den Figuren 1 und 2 ist mit dem Bezugszeichen 1 insgesamt ein Verbindungsbeschlag zum Verbinden zweier auf Gehrung geschnittener und über ein Filmscharnier 2 im äußeren Eckbereich miteinander verbundener Plattenteile 3 und 4 bezeichnet.

Bei den Plattenteilen 3 und 4 kann es sich um Plattenteile aus Holz, Spanplatten, Kunststoff oder dergleichen handeln.

Darüber hinaus können an die beiden Plattenteile 3 und 4 sich jeweils weitere, nicht dargestellte Plattenteile anschließen, die ebenfalls auf Gehrung geschnitten und über erfindungsgemäße Verbindungsbeschläge 1 miteinander verbunden sind bzw. verbunden werden können.

Ein erfindungsgemäßer Verbindungsbeschlag 1 umfasst, wie Figur 2 besonders anschaulich zeigt, ein Mutterteil 5 und ein Vaterteil 6, wobei das Mutterteil 5 in eine Senkbohrung 7 eines ersten Plattenteiles 3 und das Vaterteil 6 in eine Senkbohrung 8 des zweiten Plattenteiles 4 eingelassen wird. Das Vaterteil 6 ist mit einem einen Haltekopf 9 aufweisenden Verbindungsbolzen 10 ausgestattet, wobei dieser Verbindungsbolzen 10 mit seinem Haltekopf 9 sich in Richtung des Mutterteiles 5 erstreckt und mit einem Teil des Haltebolzens 10 in das Mutterteil 5 hineinragt. Im montierten Zustand wird dabei der Haltekopf 9 des Verbindungsbolzens 10 von einer Aufnahme 11 des Mutterteiles 5 hintergriffen, so dass sich eine formschlüssige Verbindung zwischen dem Mutterteil 5 und dem Vaterteil 6 ergibt.

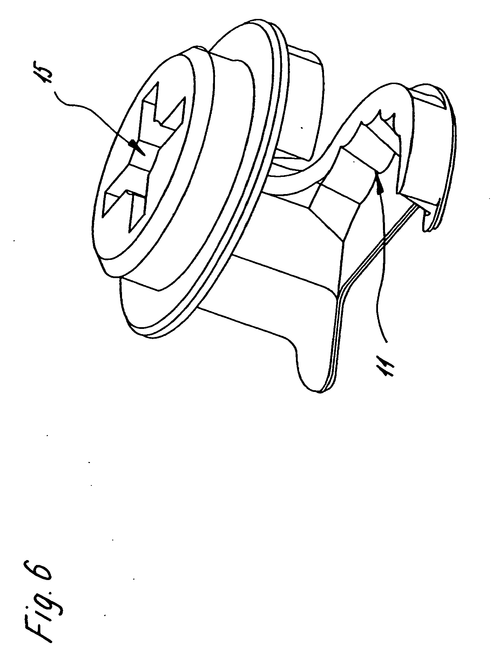

Im dargestellten Ausführungsbeispiel ist die Aufnahme 11, was Figur 6 besonders deutlich zeigt, in Form eines Spannexzenters ausgebildet, der innerhalb des Mutterteiles 5 drehbar gelagert ist. Dieser Spannexzenter 11 ist innerhalb des Mutterteiles 5 um eine Achse drehbar, die lotrecht zur Gehrungsfuge 12 (siehe Figur 1) verläuft. Im montierten Zustand erstreckt sich die Längsachse des Verbindungsbolzens 10 ebenfalls lotrecht zu der angesprochenen Gehrungsfuge 12, so dass die zwischen Verbindungsbolzen 10 und der Aufnahme 11 übertragbaren Kräfte unmittelbar in der gewünschten Verbindungsrichtung wirksam werden können.

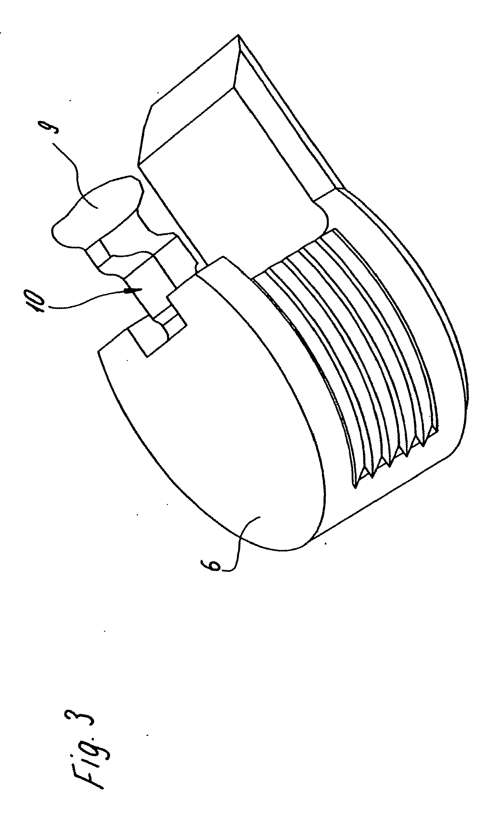

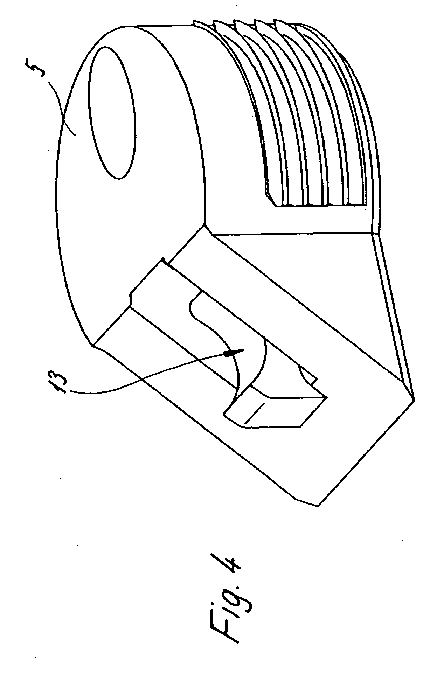

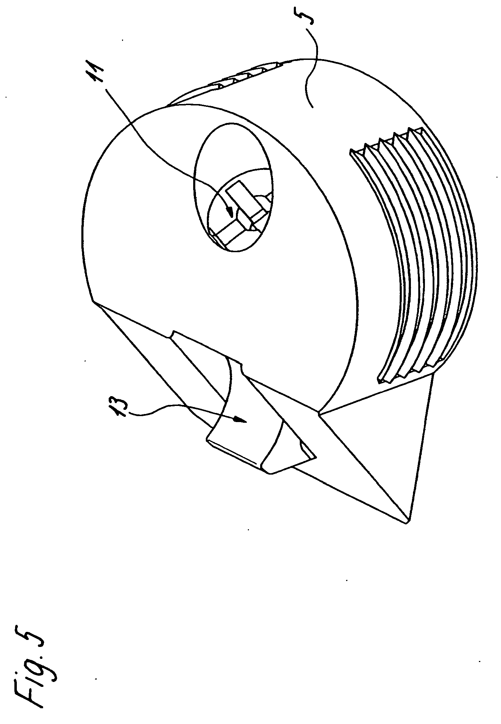

Beim Ausführungsbeispiel der Erfindung nach den Figuren 1 bis 6 ist das Vaterteil 6 gemeinsam mit dem Verbindungsbolzen 10 einstückig aus Kunststoff hergestellt, vorzugsweise aus einem elastischen Kunststoff, wobei der Verbindungsbolzen 10 derart an das Vaterteil 6 im übrigen angeformt ist, dass der Verbindungsbolzen 10 einschließlich Haltekopf 9 nicht über das Vaterteil 6 im übrigen hinaus vorsteht, was Figur 3 besonders deutlich zeigt. Damit liegt der Verbindungsbolzen 10 nebst Haltekopf 9 in einem Vormontagezustand innerhalb der Ebene eines Plattenteiles, so dass der Verbindungsbolzen 10 im vormontierten Zustand des Verbindungsbeschlages weder eine automatische Fertigung noch ein Zusammenfalten mehrerer Plattenteile behindert.

Um den Verbindungsbolzen 10 aus der besagten Vormontagestellung heraus in die Verbindungsstellung gemäß dem Figuren 1 und 2 zu bewegen, ist das Mutterteil 5 in ihrem dem Vaterteil 6 gegenüberliegenden Stirnseitenbereich mit einer Führungskurve 13 ausgestattet, über welche der Haltekopf 9 des Verbindungsbolzens 10 beim Zusammenfügen der beiden Beschlagteile 5 und 6 hinweggleitet und dabei gleichzeitig in Richtung der Aufnahme 11 aus der Vormontagestellung heraus bis in die Position gemäß den Figuren 1 und 2 bewegt wird.

Dies wird möglich durch die Federelastizität des verwendeten Kunststoffes, sofern das Vaterteil 6 nebst Verbindungsbolzen 10 einstückig hergestellt ist.

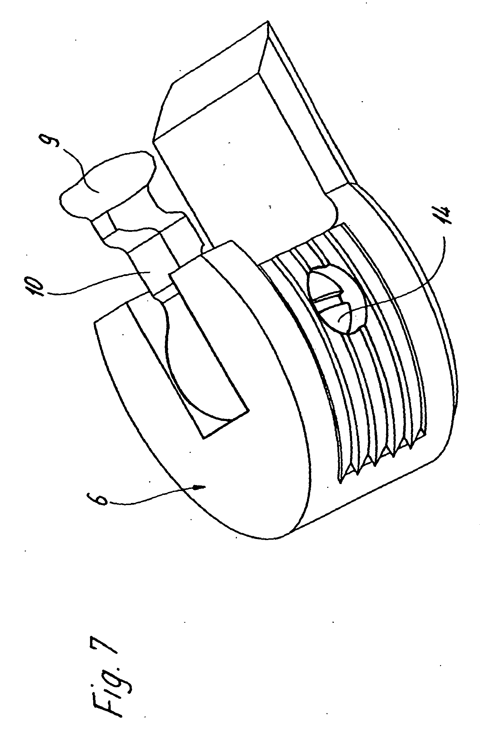

Beim Ausführungsbeispiel gemäß Figur 7 ist eine Lösung vorgesehen, bei der das Vaterteil 6 einerseits und der Verbindungsbolzen 10 andererseits als separate Bauteile hergestellt sind, wobei in diesem Falle der Verbindungsbolzen 10 um eine Achse 14, die den Grundkörper des Vaterteiles 6 und den Verbindungsbolzen 10 durchtritt, schwenkbar ist. Diese Achse 14 kann beispielsweise als Gewindebolzen ausgebildet sein, so dass der Verbindungsbolzen 10 innerhalb des Vaterteiles 6 unter einer gewissen Vorspannung festgelegt werden kann. Diese Vorspannung sollte allerdings nicht extrem hoch sein, damit ein automatisches Verschwenken des Verbindungsbolzens 10 beim Einführen in das Mutterteil nach wie vor gewährleistet bleibt. Andererseits sollte die Vorspannung so hoch sein, dass der Verbindungsbolzen 10 eine voreingestellte Vormontagestellung sicher beibehält.

Beim Ausführungsbeispiel nach Figur 7 kann der Verbindungsbolzen 10 selbstverständlich aus einem anderen Material hergestellt sein als das Vaterteil 6 im übrigen, insbesondere kann der Verbindungsbolzen 10 hier auch aus Metall gefertigt sein.

Wie Figur 6 deutlich zeigt, ist die als Spannexzenter ausgebildete Aufnahme 11 des Mutterteiles 5 an einer Stirnseite in bekannter Weise mit einer Werkzeugaufnahme 15 zur Aufnahme eines Schraubendrehers ausgestattet, so dass der Spannexzenter nach dem Einführen des Haltekopfes 9 in die Aufnahme 11 zum Zwecke des Spannens und Anziehens des Verbindungsbolzens 10 leicht verdreht werden kann.

## Patentansprüche

1. Verbindungsbeschlag (1) zum Verbinden zweier auf Gehrung geschnittener Plattenteile (3, 4) aus Holz, Spanplatten, Kunststoff oder dergleichen, **dadurch gekennzeichnet, dass** der Verbindungsbeschlag (1) aus einem in eine durch den Gehrungsschnitt angeschnittene Senkbohrung (7) des ersten Plattenteiles (3) eingesetzten und dem Gehrungsschnitt angepassten Mutterteil (5) und einem in eine entsprechende Senkbohrung (8) des zweiten Plattenteiles (4) eingesetzten, ebenfalls dem Gehrungsschnitt angepassten Vaterteil (6) besteht, wobei das Vaterteil (6) mit einem in das Mutterteil (5) hineinragenden Verbindungsbolzen (10) mit einem Haltekopf (9) versehen und das Mutterteil (5) mit einer Aufnahme (11) zum Hintergreifen des Haltekopfes (9) ausgestattet ist, wobei die Längsachse des Verbindungsbolzens (10) beim montierten Verbindungsbeschlag (1) lotrecht zur Gehrungsfuge (12) verläuft und die Aufnahme (11) zum Hintergreifen des Haltekopfes (9) aus einem Spannexzenter besteht, der innerhalb des Mutterteiles (5) drehbar gelagert ist und dass der Verbindungsbolzen (10) kippbeweglich am Grundkörper des Vaterteiles (6) angeschlossen und aus einer Vormontagestellung in eine Montagestellung bewegbar ist.

2. Verbindungsbeschlag nach Anspruch 1, **dadurch gekennzeichnet, dass** der Verbindungsbolzen (10) mit dem Vaterteil (6) im übrigen einstückig aus einem elastischen Kunststoff hergestellt ist.

3. Verbindungsbeschlag nach Anspruch 1, **dadurch gekennzeichnet, dass** der Verbindungsbolzen (10) als separates Bauteil hergestellt und um eine Achse (14) schwenkbar mit dem Grundkörper des Vaterteiles (6) verbunden ist.

4. Verbindungsbeschlag nach einem der vorhergehenden Ansprüche, **dadurch gekennzeichnet, dass** der Spannexzenter (11) innerhalb des Mutterteiles (5) um eine lotrecht zur Gehrungsfuge (12) verlaufende Achse verdrehbar gelagert ist.

5. Verbindungsbeschlag nach einem der vorhergehenden Ansprüche, **dadurch gekennzeichnet, dass** das Mutterteil (5) an seiner dem Vaterteil (6) gegenüberliegenden Seite mit einer Führungskurze (13) zum Einführen des Haltekopfes (9) des Verbindungsbolzens (10) in die Aufnahme (11) ausgestattet ist.

6. Verbindungsbeschlag nach Anspruch 3, **dadurch gekennzeichnet, dass** der Verbindungsbolzen (10) aus einem anderen Material hergestellt ist als der Grundkörper des Vaterteiles (6).

7. Verbindungsbeschlag nach Anspruch 4, **dadurch gekennzeichnet, dass** der Grundkörper des Vaterteiles (6) aus Kunststoff und der Verbindungsbolzen (10) aus Metall hergestellt sind.

## Claims

1. Connecting fitting (1) for connecting two mitre-cut panel parts (3, 4) made of wood, chipboard, plastic or the like, **characterized in that** the connecting fitting (1) consists of a female part (5), which is inserted into a countersunk hole (7), cut by the mitre cut, in the first panel part (3) and which is adapted to the mitre cut, and of a male part (6) which is inserted into a corresponding countersunk hole (8) in the second panel part (4) and which is likewise adapted to the mitre cut, wherein the male part (6) is provided with a connecting stud (10) having a retaining head (9), this connecting stud protruding into the female part (5), and the female part (5) is equipped with a socket (11) for engaging behind the retaining head (9), wherein the longitudinal axis of the connecting stud (10) extends perpendicular to the mitre joint (12) when the connecting fitting (1) is assembled, and the socket (11) for engaging behind the retaining head (9) comprises a clamping eccentric which is rotatably mounted within the female part (5), and wherein the connecting stud (10) is coupled in a tiltable manner to the basic body of the male part (6) and can be moved from a preassembly position into an assembly position.

2. Connecting fitting according to Claim 1, **characterized in that** the connecting stud (10) is moreover produced in one piece with the male part (6) from an elastic plastic.

3. Connecting fitting according to Claim 1, **characterized in that** the connecting stud (10) is produced as a separate component and connected to the basic body of the male part (6) such that it can pivot about an axis (14).

4. Connecting fitting according to one of the preceding claims, **characterized in that** the clamping eccentric (11) is mounted such that it can be rotated within the female part (5) about an axis extending perpendicular to the mitre joint (12).

5. Connecting fitting according to one of the preceding claims, **characterized in that** the female part (5) is equipped, at its side opposite the male part (6), with a guide curve (13) for introducing the retaining head (9) of the connecting stud (10) into the socket (11).

6. Connecting fitting according to Claim 3, **characterized in that** the connecting stud (10) is made of a material other than that of the basic body of the male part (6).

7. Connecting fitting according to Claim 4, **characterized in that** the basic body of the male part (6) is made of plastic and the connecting stud (10) is made of metal.

## Revendications

1. Ferrure d'accouplement (1) destinée à relier deux parties de plaque (3, 4) coupés en biais composés de bois, de panneaux à particules, de matière plastique ou similaire, **caractérisée en ce que** la ferrure d'accouplement (1) est constituée d'une partie femelle (5) adaptée à la coupe de biais et insérée dans un chambrage (7), entaillé par la coupe de biais, de la première partie de plaque (3) et d'une partie mâle (6) également adaptée à la coupe de biais, insérée dans un chambrage (8) correspondant de la seconde partie de plaque (5), la partie mâle (6) étant pourvue d'un boulon d'assemblage (10) doté d'une tête de retenue (9) et faisant saillie dans la partie femelle (5) et la partie femelle (5) étant équipée d'un logement (11) destiné à se mettre en prise par l'arrière avec la tête de retenue (9), l'axe longitudinal du boulon d'assemblage (10), lorsque la ferrure d'accouplement (1) est montée, s'étendant perpendiculairement au joint à onglet (12) et le logement (11) destiné à se mettre en prise par l'arrière avec la tête de retenue (9) étant constitué d'un excentrique de serrage qui est logé de manière rotative à l'intérieur de la partie femelle (5) et **en ce que** le boulon d'assemblage (10) est raccordé par un déplacement basculant au corps de base de la partie mâle (6) et peut être déplacé d'une position de prémontage dans une position de montage.

2. Ferrure d'accouplement selon la revendication 1, **caractérisée en ce que** le boulon d'assemblage (10) est fabriqué du reste d'un seul tenant à partir d'une matière plastique élastique avec la partie mâle (6).

3. Ferrure d'accouplement selon la revendication 1, **caractérisée en ce que** le boulon d'assemblage (10) est fabriqué comme un composant séparé et est relié, de manière à pouvoir pivoter autour d'un axe (14), au corps de base de la partie mâle (6).

4. Ferrure d'accouplement selon l'une quelconque des revendications précédentes, **caractérisée en ce que** l'excentrique de serrage (11) est logée à l'intérieur de la partie femelle (5) de manière à pouvoir tourner autour d'un axe s'étendant perpendiculairement au joint à onglet (12).

5. Ferrure d'accouplement selon l'une quelconque des revendications précédentes, **caractérisée en ce que** la partie femelle (5) est équipée sur son côté opposé à la partie mâle (6) d'un guide curviligne (13) destiné à introduire la tête de retenue (9) du boulon d'assemblage (10) dans le logement (11).

6. Ferrure d'accouplement selon la revendication 3, **caractérisée en ce que** le boulon d'assemblage (10) est fabriqué à partir d'un matériau différent de celui du corps de base de la partie mâle (6).

7. Ferrure d'accouplement selon la revendication 4, **caractérisée en ce que** le corps de base de la partie mâle (6) est fabriqué en matière plastique et le boulon d'assemblage (10) en métal.
